## Europäisches Patentamt

## European Patent Office

## Office européen des brevets

(19)

(11) Veröffentlichungsnummer : **0 221 312 B1**

(12) **EUROPÄISCHE PATENTSCHRIFT**

(45) Veröffentlichungstag der Patentschrift :
20.09.89

(51) Int. Cl.⁴ : **F 02 B 31/00**

(21) Anmeldenummer : 86113008.6

(22) Anmeldetag : 20.09.86

(54) **Ansaugsystem für gemischverdichtende, fremdgezündete Brennkraftmaschinen, mit einer elektronisch gesteuerten Kraftstoffzumesseinrichtung.**

(30) Priorität : 26.10.85 DE 3538113

(43) Veröffentlichungstag der Anmeldung :
13.05.87 Patentblatt 87/20

(45) Bekanntmachung des Hinweises auf die Patenterteilung : 20.09.89 Patentblatt 89/38

(84) Benannte Vertragsstaaten :
DE FR GB IT SE

(56) Entgegenhaltungen :
EP--A-- 0 094 002
DE--A-- 3 017 662
DE--A-- 3 217 251
FR--A-- 1 380 366
US--A-- 4 411 226

(73) Patentinhaber : **Bayerische Motoren Werke Aktiengesellschaft
Patentabteilung AJ-3 Postfach 40 02 40 Petuelring 130
D-8000 München 40 (DE)**

(72) Erfinder : **Blümel, Thomas
Dachauer Strasse 32
D-8066 Unterbachern (DE)**

(74) Vertreter : **Bücken, Helmut
Bayerische Motoren Werke Aktiengesellschaft Postfach 40 02 40 Petuelring 130 - AJ-30
D-8000 München 40 (DE)**

## Beschreibung

Die Erfindung geht gemäß dem Oberbegriff des Patentanspruches von der DE-A 32 17 251 aus.

Das bekannte Ansaugsystem umfaßt ein erstes, als Drosselklappe gestaltetes Drosselorgan für die Hauptsaugleitungen und ein weiteres, ebenfalls als Drosselklappe ausgebildetes Drosselorgan für die Hilfssaugleitungen. Über diese Hilfssaugleitung wird die Brennkraftmaschine bei niederer Last und Drehzahl — Leerlauf und untere Teillast — allein mit einem Brennstoff-Luftgemisch versorgt. Mit steigender Last und Drehzahl wird das den Hauptsaugleitungen zugeordnete Drosselorgan zunehmend geöffnet. Hierfür müssen beide als Drosselklappen gestalteten Drosselorgane gekoppelt sein.

Die Koppelung der Drosselklappen bzw. Drosselorgane kann durch mechanisches oder pneumatisches Gestänge verwirklicht sein. Weiter ist denkbar, für die gegenseitige Stellungszuordnung eine der Drosselklappen durch einen elektronisch angesteuerten Stellmotor anzutreiben. Nachteilig an den vorgenannten Koppelungseinrichtungen ist der Platzbedarf, verbunden mit Einbauschwierigkeiten, zusätzlichem Gewicht und Kosten.

Diese Nachteile vermeidet ein Ansaugsystem der eingangs genannten Bauart mit der Erfindung dadurch, daß das zweite Drosselorgan das Stellglied einer Regel- und Steuereinrichtung ist, die im Leerlaufbereich zur Leerlaufregelung dient und die bei niedrigen Lasten und niedrigen Drehzahlen der Brennkraftmaschine oberhalb des Leerlaufbereichs die Zumessung der Ladungsmenge für die Hilfssaugleitungen in Abhängigkeit von der Offenstellung des ersten Drosselorganes steuert.

Durch die Übernahme der Steuerung der Ladungsmenge durch einen an der Brennkraftmaschine sowieso vorhandenen, bekannten Leerlaufregler kann in vorteilhafter Weise die den Hilfssaugleitungen zugeordnete Drosselklappe entfallen, so daß sich auch der Platzbedarf für die Koppelungseinrichtungen erübrigt.

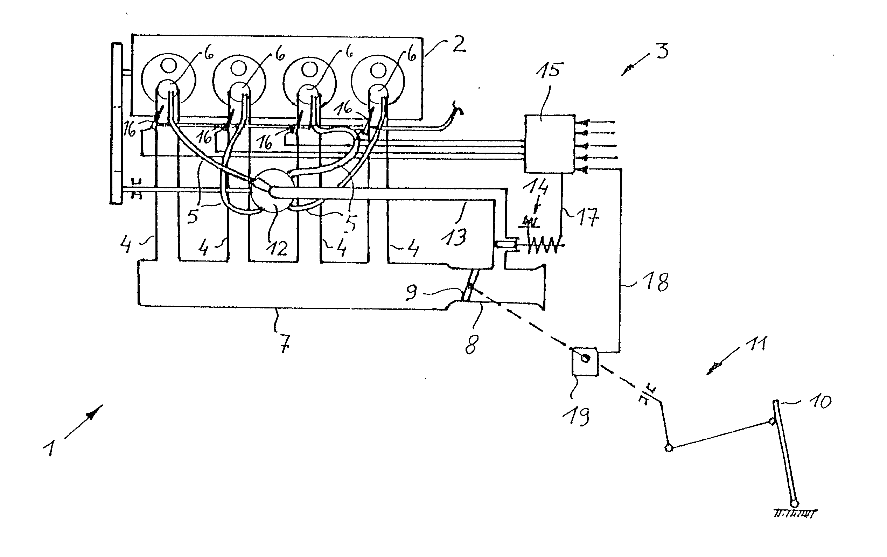

Die Erfindung ist anhand eines in der Zeichnung schematisch dargestellten Ausführungsbeispiels erläutert.

Ein Ansaugsystem 1 für eine gemischverdichtende, fremdgezündete Mehrzylinder-Brennkraftmaschine 2 mit einer elektronisch gesteuerten Kraftstoffzumeßeinrichtung 3 umfaßt Hauptsaugleitungen 4 und Hilfssaugleitungen 5. Die Hauptsaugleitungen 4 stehen an einem Ende mit Gaswechselventilen 6 im Zylinderkopf der Brennkraftmaschine 2 in Verbindung und am anderen Ende mit einem Luftsammler 7. Der Luftsammler weist einen Einlaß 8 auf, in dem eine Drosselklappe 9 schwenkbeweglich gelagert ist. Die Drosselklappe steht mit einem Fahrpedal 10 über ein Gestänge 11 in Wirkverbindung. Die Hilfssaugleitungen 5 enden einerseits in den Hauptsaugleitungen 4 jeweils im Bereich eines Gaswechselventiles 6 und andererseits an einer Steuervorrichtung 12.

Die Steuervorrichtung 12 ist ein von der Brennkraftmaschine 2 angetriebener Drehschieber, der die jeweilige Hilfssaugleitung 5 entsprechend dem Ansaugtakt des zugehörigen Zylinders öffnet. Die Steuervorrichtung 12 steht weiter mit einem Hilfseinlaß 13 in Verbindung, der in den Einlaß 8 des Luftsammlers 7 stromauf der Drosselklappe 9 mündet. Der Hilfseinlaß 13 weist eine gesondertes Drosselorgan auf, das als ein Leerlaufregler 14 ausgebildet ist.

Die Kraftstoffzumeßeinrichtung 3 umfaßt ein elektronisches Steuergerät 15 zur Ansteuerung von Einspritzdüsen 16, die in die Hauptsaugleitungen 4 in Richtung der Gaswechselventile 6 spritzen. Weiter steht die Steuereinheit 15 über eine Signalleitung 17 mit dem Leerlaufregler 14 in Verbindung. Über eine Signalleitung 18 empfängt die Steuereinheit 15 Signale von einem Potentiometer 19, das von der Welle der Drosselklappe 9 gesteuert wird. Die eingehenden Signale repräsentieren die jeweilige Offenstellung der Drosselklappe 9.

Bei Leerlauf der Brennkraftmaschine 2 ist die Drosselklappe 9 geschlossen. Die Leerlaufluft wird dabei durch den Hilfseinlaß 13, die Steuervorrichtung 12 und die Hilfssaugleitungen 5 den Zylindern bzw. Brennräumen der Brennkraftmaschine 2 getaktet zugeführt. Mit dem vom jeweiligen Einspritzventil 16 abgespritzten Kraftstoff beginnt im Bereich des jeweiligen Gaswechselventils 6 die Gemischbildung. Die Zumessung der Leerlaufluftmengen in Abhängigkeit von verschiedenen Parametern der Brennkraftmaschine 2 erfolgt in üblicher Weise durch den von der Steuereinheit 15 angesteuerten Leerlaufregler 14.

Beim Betrieb der Brennkraftmaschine 2 in niederer Last und Drehzahl jenseits des Leerlaufbereiches wird die Drosselklappe 9 geöffnet. Um dabei die Brennkraftmaschine 2 im Magerbetrieb laufen zu lassen, wird den Brennräumen der Brennkraftmaschine 2 weiter Luft über die Hilfssaugleitungen 5 getaktet zugeführt. Zur Erzielung einer für den jeweiligen Betriebspunkt größtmöglichen Verwirbelung wird die dafür erforderliche Luftmenge über den Leerlaufregler 14 zugemessen, dessen Querschnittsfreigabe im Hilfseinlaß 13 in Abhängigkeit der Offenstellung des Drosselorgans 9 gesteuert wird, wobei ein im Potentiometer 19 entsprechend der Offenstellung der Drosselklappe 9 gebildetes Signal die Ansteuerung des Leerlaufreglers 14 durch die Steuereinheit 15 bewirkt.

## Patentanspruch

Ansaugsystem (1) einer gemischverdichtenden, fremdgezündeten Brennkraftmaschine (2), die eine elektronisch gesteuerte Kraftstoffzumeßeinrichtung (3) umfaßt, mit Hauptsaugleitungen (4), die von einem ersten Drosselorgan (9) zu im Zylinderkopf der Brennkraftmaschine (2) angeordneten Gaswechselventilen (6) führen, mit Hilfssaugleitungen (5), die im Bereich der Gaswechselventile (6) in die Hauptsaugleitungen (4) einmünden und mit einer Steuervorrichtung (12), die die Hilfssaugleitungen (5) taktgesteuert mit einem Hilfseinlaß (13) verbindet, der mit einem gesonderten, last- und drehzahlabhängig steuerbaren, zweiten Drosselorgan ausgerüstet ist, dadurch gekennzeichnet, daß das zweite Drosselorgan das Stellglied einer Regel- und Steuereinrichtung (14, 15, 17, 18, 19) ist, die im Leerlaufbereich zur Leerlaufregelung dient und die bei niedrigen Lasten und niedrigen Drehzahlen der Brennkraftmaschine (2) oberhalb des Leerlaufbereichs die Zumessung der Ladungsmenge für die Hilfsaugleitungen (5) in Abhängigkeit von der Offenstellung des ersten Drosselorgans (9) steuert.

## Claim

An induction system (1) of a mixture-compressing, spark-ignited internal combustion engine (2) which comprises an electronically-controlled fuel-metering device (3) with main suction conduits (4) which lead from a first throttle element (9) to gas-exchange valves (6) arranged in the cylinder head of the internal combustion engine (2), with auxiliary suction conduits (5) which open into the main suction conduits (4) in the region of the gas-exchange valves (6) and with a control device (12) which connects the auxiliary suction conduits in time-controlled manner with an auxiliary inlet (13) which is equipped with a separate, second, throttle element controllable in dependence upon load and rotation rate, characterised in that the second throttle element is the setting member of a regulating and control apparatus (14, 15, 17, 18, 19) which serves for idling regulation in the idling range and controls the metering of the charge quantity for the auxiliary suction conduits (5) in dependence upon the opening position of the first throttle element (9) at low loads and low rotation rates of the internal combustion engine (2).

## Revendication

Système d'aspiration (1) pour un moteur à combustion interne (2) à injection électronique de carburant et allumage commandé, système comprenant une installation de dosage de carburant (3) à commande électronique et comprend des conduites principales d'aspiration (4) reliant un premier organe d'étranglement (papillon 9) aux soupapes (6) de la tête des cylindres du moteur à combustion interne (2), et des conduites auxiliaires d'aspiration (5) qui débouchent au niveau des soupapes (6) dans les conduites principales d'aspiration (4) et sont reliées à une entrée auxiliaire (13) par un dispositif de commande (12) qui commande en cadence les conduites auxiliaires d'aspiration (5), cette entrée auxiliaire étant munie d'un second organe d'étranglement distinct, commandé en fonction de la charge et de la vitesse de rotation, système caractérisé en ce que le second organe d'étranglement est l'organe de réglage d'une installation de régulation et de commande (14, 15, 17, 18, 19) qui sert à la régulation du ralenti dans la plage de ralenti et qui aux faible charge et faible vitesse de rotation du moteur à combustion interne (2) commande au-dessus de la plage de ralenti, le dosage de la quantité de charge des conduites auxiliaires (5) en fonction de la position d'ouverture du premier organe d'étranglement papillon (9).